# EUROPEAN PATENT APPLICATION

(11) **EP 2 695 560 A1**
(43) Date of publication of application: **12.02.2014**
(21) Application number: 12180123.7
(22) Date of filing: 10.08.2012
(51) Int. Cl.: A47J 41/00, F25D 5/02, C09K 5/18

(54) **A cooling device including coated reactants**

(71) Applicant: Carlsberg Breweries A/S, 1799 Copenhagen V (DK)
(72) Inventor: Vesborg, Steen, 2820 Gentofte (DK); Rasmussen, Jan Nørager, 3650 Ølstykke (DK); Andersen, Martin Gerth, 1408 Copenhagen K (DK)
(74) Representative: Nielsen, Henrik Sten

(57) **Abstract**

A cooling device comprises a housing including a first reactant and a second reactant. The first and second reactants are substantially non-toxic and causing, when reacting with one another, a non-reversible, entropy increasing reaction producing substantially non-toxic products in a stoichiometric number at least a factor 3, preferably at least a factor 4, more preferably at least a factor 5, larger than the stoichiometric number of the reactants. The first reactant is initially separated from the second reactant by a dissolvable or deterioratable polymeric coating and a dissolvable or deterioratable hydrophobic coating. The polymeric coating and the hydrophobic coating each completely encapsulate at least one of the first reactant and the second reactant. The housing further includes an actuator for initiating the reaction between the first reactant and the second reactant by at least partially dissolving or deteriorating the polymeric coating and the hydrophobic coating.

## Description

The present invention relates to a cooling device including coated reactants, a beverage container including a cooling device, a multipack including a cooling device and a method of producing a cooling device having coated reactants.

### Background of the invention

Most beverages have an optimal serving temperature significantly below the typical storage temperature. Beverage containers are typically stored in room temperatures in supermarkets, restaurants, private homes and storage facilities. The optimal consumption temperature for most beverages is around 5°C and therefore, cooling is needed before serving the beverage. Typically, the beverage container is positioned in a refrigerator or a cold storage room or the like well in advance of serving the beverage so that the beverage may assume a temperature of about 5°C before serving. Persons wishing to have a beverage readily available for consumption must therefore keep their beverage stored at a low temperature permanently. Many commercial establishments such as bars, restaurants, supermarkets and petrol stations require constantly running refrigerators for being able to satisfy the customers' need of cool beverage. This may be regarded a waste of energy since the beverage can may have to be stored for a long time before being consumed. In the present context, it should be mentioned that the applicant company alone installs approximately 17000 refrigerators a year for providing cool beverages, and each refrigerator typically has a wattage of about 200W. An object of the present invention is to provide a cooling device which may be used inside a beverage container for reducing the temperature of a beverage from about 22°C to about 5°C, thereby eliminating or at least substantially reducing the need of electrical powered external cooling.

As discussed above, the cooling of beverage containers by means of refrigeration is very slow and constitutes a waste of energy. Some persons may decrease the time needed for cooling by storing the beverage container for a short period of time inside a freezer or similar storage facility having a temperature well below the freezing point. This, however, constitutes a safety risk because if the beverage container is not removed from the freezer well before it freezes, it may cause a rupture in the beverage can due to the expanding beverage. Alternatively, a bucket of ice and water may be used for a more efficient cooling of beverage since the thermal conductivity of water is significantly above the thermal conductivity of air. Ice is also often introduced into the beverage itself in order to keep it cool. However, such ice will dilute the beverage and reduce the flavour of the beverage. There is thus a need for cooling devices which may cool the beverage quickly before the beverage is about to be consumed.

In the prior art, many attempts have been made to let a cooling device accompany the beverage container. The cooling device would be activated shortly before consuming the beverage for cooling the beverage to a suitable low temperature. Within the beverage field of packaging, a particular technique relating to cooling of beverage cans and self-cooling beverage cans have been described in among others US4403567, US7117684, EP0498428, US2882691, GB2384846, WO2008000271, GB2261501, US4209413, US4273667, US4303121, US4470917, US4689164, US20080178865, JP2003207243, JP2000265165, US3309890, WO8502009, US3229478, US4599872, US4669273, WO2000077463, EP87859 (fam US4470917), US4277357, DE3024856, US5261241 (fam EP0498428), GB1596076, US6558434, WO02085748, US4993239, US4759191, US4752310, WO0110738, EP1746365, US7117684, EP0498428, US4784678, US2746265, US1897723, US2882691, GB2384846, US4802343, US4993237, WO2008000271, GB2261501, US20080178865, JP2003207243, US3309890, US3229478, WO2000077463, WO02085748.

The above-mentioned documents describe technologies for generating cooling via a chemical reaction, alternatively via vaporisation. For using such technologies as described above, an instant cooling can be provided to a beverage and the need of pre-cooling and consumption of electrical energy is avoided. Among the above technologies, the cooling device is large in comparison with the beverage container. In other words, a large beverage container has to be provided for accommodating a small amount of beverage resulting in a waste of material and volume. The applicant company has conducted extensive research in the particular field of cooling devices and has thereby derived cooling devices which generate more cooling and/or occupying less space within the beverage container. Such cooling devices have been described in the applicants own international applications WO 2010/066772, WO 2010/066775 and WO 2011/157735, which all describe the use of two reactants which react in an entropy increasing reaction.

German published patent application DE 21 50 305 A1 describes a method for cooling beverage bottles or cans. A cooling cartridge including a soluble salt is included in the bottle or can. By dissolving the salt in a specific volume of water a cooling effect is obtained by utilizing the negative solution enthalpy. However, by using the negative solution enthalpy as proposed, the lowest temperature achieved was about 12°C, assuming an initial temperature of 21 °C. None of the examples of embodiments achieves the sought temperature of about 5°C. By calculating the heat reduction in the beverage (Q=c*m*ΔT), the example embodiments achieve heat reductions of only about 15-38J/ml of beverage. Further, all of the reactions proposed in the above-mentioned document are considered as reversible, since the reaction may be reversed by simply removing the water from the solution. By removing the water, the dissolved salt ions will recombine and form the original reactants.

The German utility model DE 299 11 156 U1 discloses a beverage can having an external cooling element. The cooling element may be activated by applying pressure to mix two chemicals located therein. The document only describes a single chemical reaction including dissolving and disassociation of potassiumcloride, salpeter and salmiacsalt in water which is stated to reach a temperature of 0°C or even -16°C of the cooling element, although the description is silent about the starting temperature of the cooling element.

Many non-reversible entropy increasing reactions are known as such. One example is found on the below internet URL: http://web.archive.org/web/20071129232734/ http://chemed.chem.purdue.edu/demo/demosheets/5.1.html. The above reference suggests the below reaction:
- Ba(OH)₂•8H₂O(s) + 2NH₄SCN(s) → Ba(SCN)₂ + 2NH₃(g) + 10H₂O(l)

The above reference suggests that the reaction above is endothermal and entropy increasing and generates a temperature below the freezing temperature of water. However, there is no indication that the above reaction may be used in connection with the cooling of beverage, nor is any information about the amounts of reactants required available, nor the use of an actuator to initiate the reaction.

Different from most solution reactions, it should be noted that the above reaction may be initiated without the addition of any liquid water. Some other non-reversible entropy increasing reactions require only a single drop of water to initiate.

The use of ammonia is in the present context not preferred, since ammonia may be considered toxic, and will, in case it escapes into the beverage, yield a very unpleasant taste to the beverage. Preferably, all reactants as well as reaction products should in addition to being non-toxic have a neutral taste in case of accidental release into the beverage.

The entropy increasing reaction involves reactants which react spontaneously when contacting each other. In order to achieve a fast enough reaction, the two reactants must be provided completely mixed and finely grained. The reactant grains are thereby provided with a thin coating in order to ensure that the reaction doesn't start immediately when mixing the two reactants. The reaction should be started at a user-determined moment by an actuator which adds water and surfactant to the powder mixture. The water dissolves the coating and allows the reactants to contact. The user determined moment is typically shortly before the user intends to consume the beverage. It is thus a feature according to the present invention that the cooling is performed quickly.

It has however been observed that the reaction may be started at a premature moment in case the two reactants are exposed and contacting each other before the user activates the actuator. Since the reaction typically starts simply by contacting the reactants and since the reaction itself produces water, it may be sufficient that the coating of just a few adjacent grains have been dissolved or deteriorated. There are two major causes for premature activation of the chemical reaction between the two reactants. There may exist small water droplets or water vapour which may come into contact with the coatings of the two reactants. The water droplets may slowly dissolve the coatings of some of the grains and cause some reactants to contact. Further, there may be a significant friction between the individual grains within the cooling device. When the cooling device is transported, the grains may tear or scratch against each other and the reactant may be exposed.

It is thus an object according to the present invention to prevent premature activation of the cooling device.

A further advantage according to the present invention is that the beverage container and the cooling device may be stored for an extended time such as weeks, months or years until shortly before the beverage is about to be consumed at which time the cooling device is activated and the beverage is cooled to a suitable consumption temperature.

### Summary of the invention

The above object, need, feature and advantage together with numerous other objects, needs, features and advantages which will be evident from the below detailed description of preferred embodiments of the cooling device according to the present invention are according to a first aspect of the present invention obtained by a cooling device comprising a housing, the housing including a first reactant and a second reactant, the first and second reactants being substantially non-toxic and causing when reacting with one another a non-reversible, entropy increasing reaction producing substantially non-toxic products in a stoichiometric number at least a factor 3, preferably at least a factor 4, more preferably at least a factor 5, such as a factor 6, 7 or 8 larger than the stoichiometric number of the reactants, the first reactant initially being separated from the second reactant by a dissolvable or deterioratable polymeric coating and a dissolvable or deterioratable hydrophobic coating, the polymeric coating and the hydrophobic coating each completely encapsulating at least one of the first reactant and the second reactant, the housing further including an actuator for initiating the reaction between the first reactant and the second reactant by at least partially dissolving or deteriorating the polymeric coating and the hydrophobic coating.

The first and second reactants used in the cooling device should be held separately before activation of the cooling device and when the cooling device is activated, the two reactants are caused to react with one another. The reactants are provided with the hydrophobic coating and the polymeric coating preventing any reaction to start until activation. The polymeric coating may be applied to one of the reactants and the hydrophobic coating to the other reactant, Alternatively, both the polymeric coating and the hydrophobic coating may be applied to one or both of the reactants. The two reactants should be substantially non-toxic, which will be understood to mean non-fatal if accidentally consumed in the relevant amounts used in the cooling device. It is further contemplated that there may be more than two reactants, such as three or more reactants. The reaction should be an entropy increasing reaction, i.e. the number of reaction products should be larger than the number of reactants. In the present context it has surprisingly been found out that an entropy increasing reaction producing products of a stoichiometric number of at least three, preferably four or more, preferably five larger than the stoichiometric number of the reactants will produce a more efficient cooling than a smaller stoichiometric number. The stoichiometric number is the relationship between the number of products divided with the number of reactants. The reaction should be non-reversible, i.e. understood to mean it should not without significant difficulties be possible to reverse the reaction, which would cause a possible reheating of the beverage. The temperature of the beverage should be reduced by at least 15°C or preferably 20°C, which for a water-based beverage corresponds to a heat reduction of the beverage of about 63 to 84 joules per ml of beverage. Any smaller temperature or heat reduction would not yield a sufficient cooling to the beverage, and the beverage would be still unsuitably warm when the chemical reaction has ended and the beverage is about to be consumed. Preferably, the chemical reaction produces a heat reduction of 120-240J/ml of reactants, or most preferably 240-330J/ml of reactants. Such cooling efficiency is approximately the cooling efficiency achieved by melting of ice into water. The chemical reaction should preferably be as quick as possible, however still allowing some time for the thermal energy transport for avoiding ice formation near the cooling device. It has been contemplated that preferably the heat or temperature reduction is accomplished within no more than five minutes or preferably no more than two minutes. These are time periods which are acceptable before beverage consumption. In the present context it may be noted that carbonated beverages typically allow a lower temperature of the cooling device compared to non-carbonated beverages since the formation of CO₂ bubbles rising in the beverage will increase the amount of turbulence in the beverage and therefore cause the temperature to equalize faster within the beverage.

Further, the term non-reversible should be considered to be synonymous with the word irreversible. The term non-reversible reaction should be understood to mean a reaction in which the reaction products and the reactants do not form a chemical equilibrium which is reversible by simply changing the proportions of the reactants and/or the reaction products and/or the external conditions such as pressure, temperature etc. Examples of non-reversible reactions include reactions in which the reaction products constitute a complex, a precipitation or a gas. Chemical reactions, such as reactions involving dissolving of a salt in a liquid such as water and disassociation of the salt into ions, which form an equilibrium, will come to a natural stop when the forward reaction and the backward reaction proceed at equal rate. E.g. in most solutions or mixtures the reaction is limited by the solubility of the reactants. A non-reversible reaction as defined above will continue until all of the reactants have reacted.

An actuator is used for activating the chemical reaction between the reactants. A reactant may include a pressure transmitter for transmitting a pressure increase, or alternatively a pressure drop, from within the beverage container to the cooling device for initiating the reaction. The pressure drop is typically achieved when the beverage container is open, thus the cooling device may be arranged to activate when the beverage container is being opened, alternatively, a mechanical actuator may be used to initiate the chemical reaction. The mechanical actuator may constitute a string or a rod or communicate with the outside of the beverage container for activating the chemical reaction. Alternatively, the mechanical actuator may be mounted in connection with the container closure so that when the container is opened, a chemical reaction is activated. The activation may be performed by bringing the two reactants in contact with each other, i.e. by providing the reactants in different chambers provided by a breakable, dissolvable or rupturable membrane, which is caused to break, dissolve or rupture by the actuator. The membrane may for instance be caused to rupture by the use of a piercing element. The reaction products should, as well as the reactants, be substantially non-toxic.

One kind of activator is disclosed in the previously mentioned DE 21 50 305 A1, which uses a spike to penetrate a membrane separating the two chemicals. US 2008/0016882 shows further examples of activators having the two chemicals separated by a peelable membrane or a small conduit.

The volume of the products should not substantially exceed the volume of the reactants, since otherwise, the cooling device may be caused to burst during the chemical reaction. A safety margin of 3 to 5%, or alternatively a venting aperture, may be provided. A volume reduction should be avoided as well. The reactants are preferably provided as granulates, since granulates may be easily handled and mixed. The granulates may be provided with a coating for preventing reaction. The coating may be dissolved during activation by for instance a liquid entering the reaction chamber and dissolving the coating. The liquid may be referred to as an activator and may constitute e.g. water, propylene glycol or an alcohol. It is further contemplated that a reaction controlling agent, such as a selective adsorption controlling agent or a retardation temperature setting agent may be used for reducing the reaction speed, alternatively, a catalyst may be used for increasing the reaction speed. It is further contemplated that a container may comprise guiding elements for guiding the flow of beverage towards the cooling device for increasing the cooling efficiency.

The hydrophobic coating and the polymeric coating should be dissolvable or deterioratable such that the entropy increasing reaction may start when the actuator is initiated. The actuator causes at least some of the coating to dissolve or deteriorate and in this way exposes at least some of the first and second reactants to each other. The entropy increasing reaction typically produces water which will dissolve or deteriorate the remaining coatings such that a complete reaction is achieved.

The hydrophobic coating is applied to one or both of the reactants. The hydrophobic coating causes small water droplets of water to be repelled by the coating. Such small amounts of water of a size smaller than a drop such as droplets or vapour will thus not be capable of dissolving or deteriorating the coating. In this way a premature activation due to the presence of small amounts of water adjacent the reactants or by small amounts of water or water like substances such as vapour or beverage which in small amounts may penetrate the housing and reach the reactants within the housing is prevented. The larger amounts of water, which may exceed the amount of one drop, which may be released by the actuator and which may result from the entropy increasing reaction will be able to dissolve the hydrophobic coating. The hydrophobic coating may preferably be a fatty acid coating.

The polymeric coating is also applied to one or both of the reactants. The polymeric coating may be applied to the same reactant as the hydrophobic coating or the polymeric coating and the hydrophobic coating may be applied to different reactants. The polymeric coating has a very low surface roughness and is very tough and flexible and therefore significantly reduces the friction between the reactants and thus prevents the polymeric coating from being scratched off when the coated reactant grains are moving adjacent each other. Thus, the housing comprising the coated reactants may be handled during transport and storage without the risk that the entropy increasing reaction initiates prematurely. Thus, the above hydrophobic coating together with the polymeric coating significantly reduced the risk that the entropy increasing reaction starts before being initiated by the user via the actuator.

The present cooling device may also be used in a so-called party keg, which is a beverage keg having internal pressurization and dispensing capabilities. In this way, the comparatively large party kegs must not be pre-cooled before being used. The cooling device may alternatively be provided as a widget which is freely movable within the container. This may be suitable for glass bottles where it may be difficult to provide a fixated cooling device. The cooling device may also be used outside the beverage container as an external cooling device together with a multipack of beverage containers.

The entropy increasing reaction, like Na2SO410H2o + CaCl*6H2O or NH₄Cl+ Sr(OH)₂*8H₂O differs from the well known enthalpy decreasing reactions, such as dissolving table salt in water, by the fact that a reaction takes place. In an enthalpy decreasing reaction, the ions go from a substantially resting state to a dynamic state within the water. The acceleration of the particles requires energy which is taken from the surroundings in the form of heat energy, hence the surroundings cool. The cooling power is however low as also the water in which the salt is dissolved must be cooled.

In the entropy increasing reaction, the cooling effect is generated for the same reason, i.e. the acceleration of particles, however, as the reactants are hydrates, the water is already included in the reactant. The water thus contributes to the cooling instead of reducing the cooling. In order to complete the reason, some reaction products must be removed.

According to a further embodiment of the first aspect of the present invention, the thickness of the polymeric coating and/or the hydrophobic coating is between 0.25 and 5 microns, such as 0.5 and 2 microns or about 1 micron. The thickness of the coatings as indicated above is typically very thin in order to dissolve or deteriorate very quickly when the actuator is initiated. The coatings are nevertheless sufficiently thick to prevent a premature initiation of the reaction between the first and second reactants.

According to a further embodiment of the first aspect of the present invention, the first reactants being provided in the form of granulates having a first average diameter, the second reactants being provided in the form of granulates having a second average diameter, the first diameter preferably exceeding the second diameter by at least a factor 2, preferably by a factor 3-5. By differentiating the granulate sizes of the first and second reactants, two advantages may be achieved. Firstly, the packing density may be inproved compared to equally sized granulates. The granulates are approximately spherical. The small granulates may thereby be accommodated in the space inbetween the larger granulates. Further, large granulates have a smaller surface compared to its volume and will thus react slower than small granulates. The size of the granulates may thus be determined in relation to the reaction speed of the reactant.

According to a further embodiment of the first aspect of the present invention, the first diameter being in the range of 100-5000 microns, preferably 200-2000 microns, more preferably 300-600 microns, and, the second diameter being in the range of 10-300 microns, preferably 50-200 microns, more preferably about 100 microns. The above diameters are considered to be appropriate diameters of the first and second reactants in order to achieve a fast reaction speed.

According to a further embodiment of the first aspect of the present invention, the first reactant constitutes Sr(OH)₂*8H₂O. Strontium hydroxide octa hydrate particles are suitable as the first reactant.

According to a further embodiment of the first aspect of the present invention, the second reactant constitutes NH₄Cl. Ammonium chloride particles are suitable as the second reactant.

According to a further embodiment of the first aspect of the present invention, the mole ratio between the Sr(OH)₂*8H₂O and the NH₄Cl is between 1:1.8 and 1:2.7, corresponding to a weight ratio between 2.7:1 and 1.8:1, respectively. The most preferred mole ratio is between 1:2.2 and 1:2.5 corresponding to a weight ratio between 2.25:1 and 2:1, respectively. By providing the above reactants in the above weight ratio, a complete reaction is achieved.

According to a further embodiment of the first aspect of the present invention, the actuator comprises a mixture of H₂O, surfactant and optionally an alcohol. The water will be ejected from the actuator during initiation. The water will encapsulate the hydrophobic coating and dissolve the polymeric coating. The purpose of the surfactant is to overcome the hydrophobic coating. Without the surfactant it becomes basically impossible to wet the surface of the hydrophobic coating as the actuator liquid cannot penetrate into the material. The presently preferred formulation of the actuator liquid is 88% water, 3% EtOH, 3% Tween 80, 3% Triton X-100, 3% Dow superwetter Q2-5211. The surfactant, such as soap, will reduce the surface tension of the water and will reduce the liquid's contact angle on the hydrophobic coating consequently allowing the water to establish a good contact with the first and second reactants.

According to a further embodiment of the first aspect of the present invention, the polymeric coating comprises HPMC (Hydroxypropylmethylcelluloses), preferably applied by a fluid bed coating assembly. Fluid bed coating is preferably used in order to ensure a complete encapsulation of the reactant.

According to a further embodiment of the first aspect of the present invention, the hydrophobic coating comprises a surface modified pyrogenic silica, preferably applied as a powder coating. Conventional fumed or pyrogenic silica is hydrophilic. After treating the pyrogenic silica with Dimethyldichlorosilane or a similar compound the silica's surface is modified so it becomes strongly hydrophobic. The mineral kaolin may also be used in a similar manner to the silica provided that it is also surface modified so it becomes hydrophobic. Hydrophilic silica or hydrophilic kaolin does not work as coating. Powder coating is preferably used in order to ensure a complete encapsulation of the reactant.

According to a further embodiment of the first aspect of the present invention, the housing comprises a flexible bag of polymeric material, preferably a metal coated polymeric material. The housing of the cooling device may be of polymeric material preferably laminated plastic foils. In this way the cooling device may be deformed in order to achieve a suitable outer cooling surface fitting within the beverage container or adjacent the beverage container.

The above object, need, feature and advantage together with numerous other objects, needs, features and advantages which will be evident from the below detailed description of preferred embodiments of the cooling device according to the present invention are according to a second aspect of the present invention obtained by a beverage container comprising an inner space, the inner space comprising a beverage and a cooling device according to the first aspect. The cooling device may preferably be accommodated within a beverage container in order to achieve a direct contact between the beverage and the surface of the cooling device. In this way a quick and efficient cooling of the beverage is achieved.

The above object, need, feature and advantage together with numerous other objects, needs, features and advantages which will be evident from the below detailed description of preferred embodiments of the cooling device according to the present invention are according to a third aspect of the present invention obtained by a multipack comprising a casing, the casing defining an inner space and including one or more beverage containers and one or more cooling devices according to the first aspect. Alternatively, the cooling device is located outside the beverage container in a multipack comprising one or more beverage containers. The cooling device then resembles a well known cooling block with the advantage that the activation may be performed at user initiative. The cooling will be somewhat slower than the cooling device included in the beverage container since the cooling device will not be in direct contact with the beverage. However, the multipack may be made of thermally insulating material such as polystyrene.

According to a further embodiment of the second or third aspect of the present invention, the housing of the cooling device defining a housing volume not exceeding approximately 33% of the specific volume of the beverage and further not exceeding approximately 25% of the inner volume of the inner space, the first and second reactants causing, when reacting with one another, a heat reduction of the beverage of at least 50 Joules/ml beverage, preferably at least 70 Joules/ml beverage, such as 70-85 Joules/ml beverage, preferably approximately 80-85 Joules/ml, within a period of time of no more than 5 min. preferably no more than 3 min., more preferably no more than 2 min. It has been contemplated that a cooling device housing volume of about 33% of the beverage volume and 25% of the total inner volume of the beverage container would be still acceptable trade off between cooling efficiency and accommodated beverage volume. A too small cooling device would not be able to cool the beverage to sufficiently low temperatures.

The above object, need, feature and advantage together with numerous other objects, needs, features and advantages which will be evident from the below detailed description of preferred embodiments of the cooling device according to the present invention are according to a fourth aspect of the present invention obtained by a method of producing a cooling device, the method comprising:
providing a first reactant and a second reactant, the first and second reactants being substantially non-toxic and causing when reacting with one another a non-reversible, entropy increasing reaction producing substantially non-toxic products in a stoichiometric number at least a factor 3, preferably at least a factor 4, more preferably at least a factor 5, such as a factor 6, 7 or 8 larger than the stoichiometric number of the reactants,
providing a dissolvable or deterioratable polymeric coating mixture and a dissolvable or deterioratable hydrophobic coating mixture,
providing a housing, the housing including an actuator for initiating the reaction between the first reactant and the second reactant by at least partially dissolving or deteriorating the polymeric coating and the hydrophobic coating,
coating at least one of the first and second reactants by the polymeric coating mixture, preferably by using a fluid bed coating assembly,
coating at least one of the first and second reactants by mixing at least one of the first and second reactants together with the hydrophobic coating mixture, and,
introducing the first and second reactants into the housing and sealing the housing.

It is contemplated that the above method according to the fourth aspect may be used for producing the cooling device according to the first aspect. The coating is preferably made in a continuous process. The first and second reactants are preferably treated in order to remove any excess water, i.e. water not bound to the reactants as crystals. Such water may initiate the reaction prematurely. Subsequently, the reactants are preferably fractionated into granulates of a size between 100 and 1000 microns. Subsequently the fluid bed is used for coating one or both of the reactants with the polymeric coating. The fluid bed may also be used for coating one or both of the reactants with the hydrophobic coating, however, other coating method are feasible. Finally, the first and second coated reactant are mixed and introduced into the housing, where after the housing is sealed.

### Brief description of the drawings

Fig 1 is a cooling device included in a beverage container.
Fig 2 is an example of a fluid bed coating assembly
Fig 3 is an actuator
Fig 4 is a series illustrating the filling of a beverage can having a cooling device
Fig 5 is a first embodiment of a cooling device within a beverage can
Fig 6 is a further embodiment cooling device within a beverage can
Fig 7-8 is a cooling device in the form of a sleeve
Fig 9 is a cooling device in the form of a cap
Fig 10 is a cooling device in the form of a stick
Fig 11 is a cooling device in the form of a neck sleeve
Fig 12-13 is a cooling device in a multipack carrier
Fig 14 is a cooling device within a multipack plastic wrapping
Fig 15-17 illustrate different embodiments of party kegs having cooling devices
Fig 18 is a cooling device resembling an ice cube
Fig 19 is a cooling device resembling an ice block
Fig 20 is a cooling device within a beverage bag
Fig 21 is another cooling sleeve.

### Detailed description of the drawings

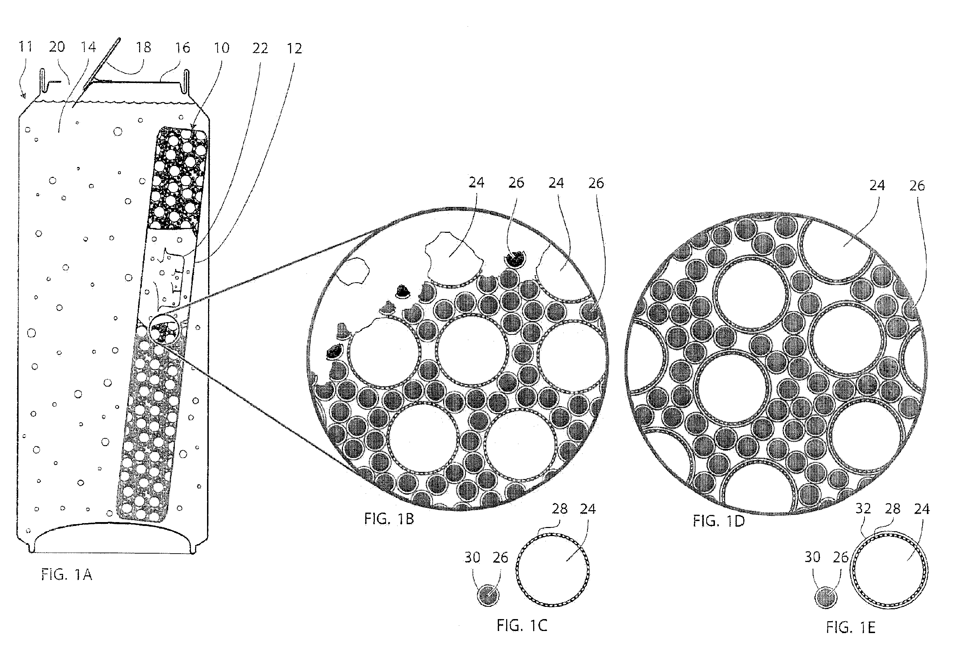

Fig 1A shows a cooling device 10 included in a beverage container 11. The cooling device 10 comprises a housing 12. The housing 12 may be a metal container, however, preferably the housing 12 is a flexible laminated bag made of a metal coated plastic material. The metal coating constitutes a water barrier to avoid any water entering the housing 12. The beverage container 11 is filled with beverage 14, preferably being a carbonated beverage such as beer. The beverage container 11 includes a lid 16 having a tab 18 which may be operated in order to produce an opening 20 in the lid 16 in order to dispense the beverage 14. The cooling device 10 includes an actuator 22 which activates due to the pressure drop when opening the beverage container 11 and thereby releases a dose of water, alcohol and surfactant in order to initiate the entropy increasing reaction. More details about the actuator 22 will be described below.

Fig 1B shows a close-up view of the interior of the housing 12 of the cooling device 10. The housing 12 of the cooling device 10 further comprises a first reactant 24 and a second reactant 26. The first and the second reactants 24,26 are mixed together and provided in the form of granulates in order to achieve a fast reaction. The first reactant 24 constitutes strontium hydroxide octa hydrate, Sr(OH)₂*8H₂O., and the second reactant 26 constitutes ammonium chloride, NH₄Cl. The first and second reactants 24,26 react in a entropy increasing reaction upon contact. Therefore, the first and second reactants 24,26 are provided with a coating which is physically separating the first and second reactants 24,26. The coating will be described in more details in fig 1B. When the actuator 22 activates and releases the dose of water, alcohol and surfactant, the coating of some of the granulates of the first and second reactants 24,26 will dissolve and the first and second reactants 24,26 will be exposed to each other and the entropy increasing reaction will initiate. The entropy increasing reaction makes the endothermic reaction run spontaneously and results in the formation of more free water molecules which will help dissolving the coatings of the remaining granulates of the first and second reactants 24,26 which will consequently react. The reaction increases the overall entropy and to do so heats energy from the surroundings is used and thus a cooling effect is achieved.

Fig 1C shows two individual samples of the first and second reactants 24,26. The granulates of the first reactant 24, i.e. strontium hydroxide octa hydrate, Sr(OH)₂*8H₂O, have a diameter between 300 and 600 microns, 3-6 times larger than the diameter of the granulates of the second reactant 26, i.e. ammonium chloride, being about 100 microns. In this way the reactants may be more efficiently packed in the housing 12 and the reaction speed may be optimized. The first reactant 24 has an inner coating 28 consisting of a HPMC polymeric coating 28. The polymeric coating 28 is applied by means of a fluid bed which is explained in more detail in the next figure. The polymeric coating 28 has a thickness of about 1-3 micron and completely surrounds each of the granulates of the first reactant 24. The polymeric coating 28 is flexible and has a low surface roughness and thus provided for resistance against scratching e.g. when the cooling device 10 is transported or stored. The polymeric coating 28 will thus not be removed in case another granulate is tearing against the polymeric coating 28. In this way an accidental initiation of the chemical reaction due to granulates tearing against each other is removed.

The second reactant 26 has a hydrophobic coating 32. The hydrophobic coating 32 may be applied by means of a fluid bed which is explained in more detail in the next figure or alternatively another coating method. The hydrophobic coating 32 has a thickness of about 1-3 micron and completely surrounds each of the granulates of the second reactant 24.The hydrophobic coating 32 comprises a pyrogenic silica which may comprise 1% Evonik R972 hydrophobic aerosil having a particle size of 16nm and 2% KaMin WC-426 surface modified kaolin having a particle size of 1.5 micron.
The hydrophobic coating 32 acts to repel any small droplets of water which may exist in the housing or diffuse into the housing. Any such water droplets or vapour may possibly dissolve or deteriorate the coating and/or the second reactants such that contact is achieved between the first and second reactant. When the actuator 22 is activated, the amount of water will exceed the capability of the coating to deflect the water and thus the hydrophobic coating 32 will be dissolved or deteriorated and the entropy increasing reaction will start.

Fig 1D shows a close-up view of the interior of the housing 12 of the cooling device 10, in which the polymeric coating 28 is encapsulated by an optional outer coating 32 consisting of a hydrophobic coating which is completely encapsulating the polymeric coating 28 and which resembles the hydrophobic coating 30 of the second reactant 26.

Fig 1E shows two individual samples of the first and second reactants 24,26, in which the polymeric coating 28 is encapsulated by an optional outer coating 32. The hydrophobic coating may e.g. comprise a mixture (by weight) of 65% WC-426 surface modified kaolin, 26% Isaplamitic acid (fatty acid), 6% MgSO₄.H₂O and 3% ZnStearate (dispersion aid). Alternatively, a fatty acid coating may be used. The coating may be applied in a fluid bed. The outer coating 32 is optional, i.e. a thick polymeric coating 32 may suffice in at least some cases.

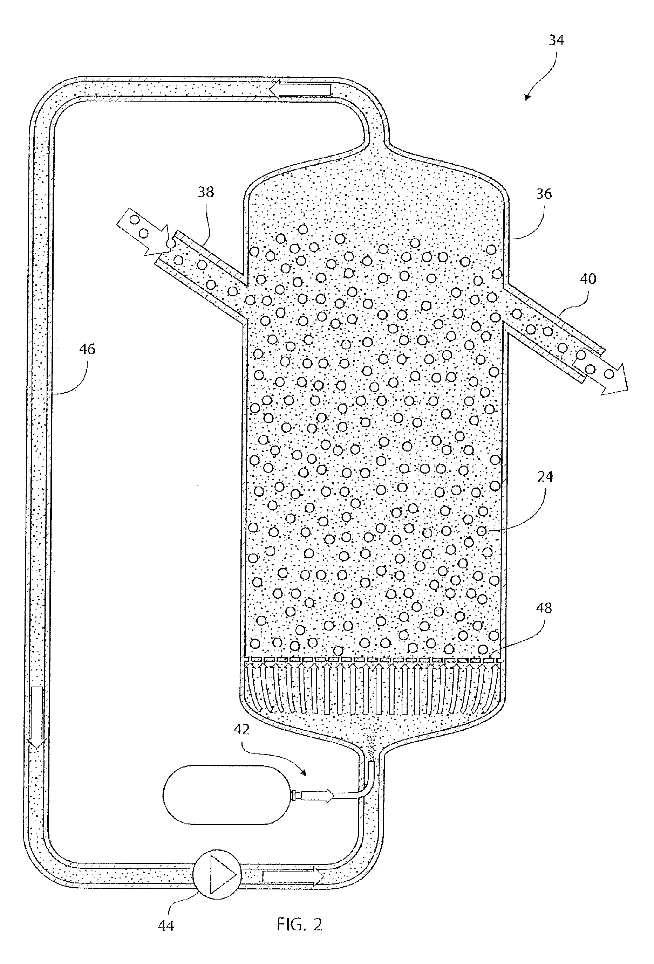

Fig 2 shows a fluid bed coating assembly 34 suitable for applying the polymeric coating 28 onto the granulates of the first reactant 24. The fluid bed coating assembly 34 comprises a reaction chamber 36. The first reactant 24 is introduced into the reaction chamber 36 via an inlet 38. The coated granulates of the first reactant 24 are removed from the reaction chamber via an outlet 40. The polymeric coating 28 material is introduced into the reaction chamber 36 via an injector 42. The polymeric coating 28 material is preferably introduced in gaseous form, however, liquid or powder form may also be contemplated. The polymeric coating 28 material is led via a gas stream, or possibly liquid stream, within the reaction chamber 36 from the bottom of the reaction chamber 36 to the top of the reaction chamber 36 and further from the top of the reaction chamber 36 to the bottom of the reaction chamber 36 by means of a pump 44 and a pipe 46. The first reactant 24 is thereby suspended in the reaction chamber 36 by means of the gas stream. The inlet 38 and outlet 40 are located on opposite sides of the gas stream such that the granulates of the first reactant 24 propagate slowly from the inlet 38 to the outlet 40. An optional grid 48 is located at the bottom of the reaction chamber 36 for preventing any granulates of the first reactant 24 from falling out while allowing the coating material 28 to pass.

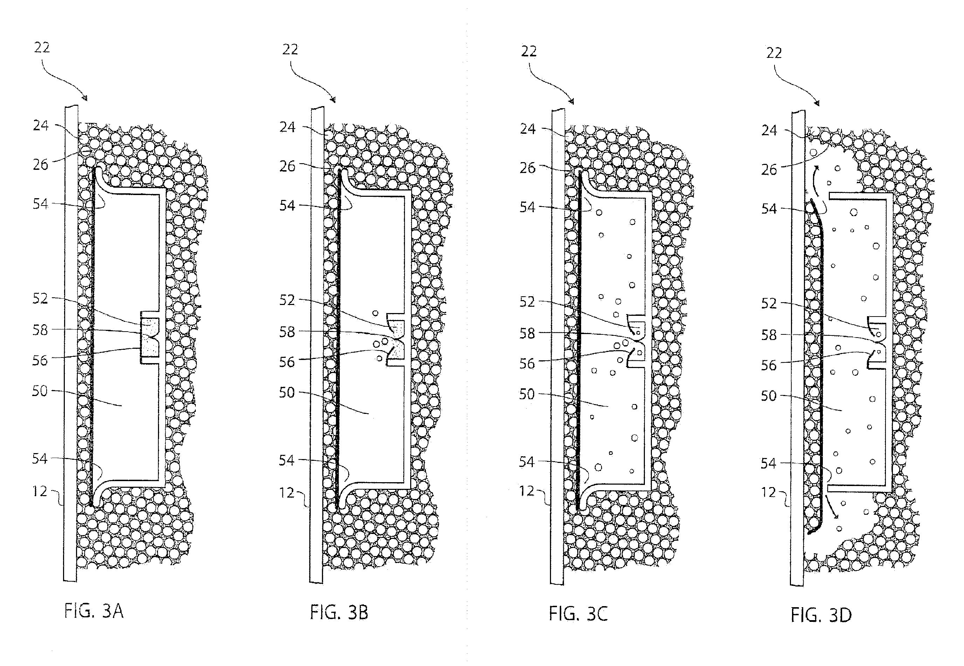

Fig 3A shows a cut-out side view of an actuator 22 in its non-armed state. The actuator is suitable for use together with the cooling device of fig 1. The cooling device comprises a housing filled with a mixture of the first reactant 24 and the second reactant 26. The first reactant 24 and the second reactant 26 should be capable of reacting with one another in a non-reversible, entropy increasing reaction as previously described, which reaction is an endothermic reaction which will draw energy from the surroundings. The reactants 24, 26 are provided in the form of granulates. Optionally, an anti-caking agent may be included in order to prevent the reactants from sticking together and a bitter taste compound in order for the user to detect any accidental leakage of reactants into the beverage. The mixture of the first reactant 24 and the second reactant 26 should be handled in a completely water free environment since even a small amount of water may initiate the reaction between the first reactant 24 and the second reactant 26. The first reactant 24 and the second reactant 26 are coated as described above.

The actuator 22 comprises a first actuator chamber 50 in which a small headspace is provided, which headspace is not shown in the drawings, and a second actuator chamber 52. The first actuator chamber 50 is separated from the first and second reactantants 24,26 by a wall having a predetermined breaking point 54, or alternatively a wall having a burst membrane. The first actuator chamber 50 is filled with non carbonated water and may optionally include a foam generator such as a surfactant. The foam generator should be a substance which, when mixed with water generates, a substantial amount of aqueous foam. Example of such material is NaC₁₂H₂₃SO₄. Further examples are NaC₁₂H₂₃SO₃ and NaC₁₂H₂₃C₆H₄SO₃. The water may further include a gelling agent, a coating or a constituent exhibiting low solubility in water in order to slow down the reactions and/or solution of the chemical constituents included in the cooling device. Constituents exhibiting low solubility in water agents are: one of calcium carbonate, iron carbonate, strontium carbonate and an acid exhibiting low solubility such as propanoic acid, buten acid, penten acid, alanine, leucine. Gelling agents may include carboxymethyl cellulose (CMC), hydroxyethyl cellulose (HEC), hydroxypropylmethyl cellulose (HPMC), metylcellulose (MC), gelatine, locust, bean gum, possibly combined with xanthangum.

The second actuator chamber 52 is separated from the first actuator chamber 50 by a pierceable burst membrane 56. The pierceable burst membrane 56 may be a film of plastic or metal which is intended to break or rupture when the pressure difference across the membrane exceeds a predetermined value. Optionally, the second actuator chamber 52 comprises a piercing element 58 directed towards the pierceable burst membrane 56 in the form of a sharp point which is intended to be driven into the pierceable burst membrane 56 when difference across the membrane exceeds a predetermined value. The second actuator chamber is filled by a CO₂ generating constituent, such as a mixture of citric acid and bicarbonate. Optionally, the above mentioned gelling agent and/or foam generator is included in the second actuator chamber 52.

Fig 3B shows a cut-out side view of an actuator 22 when being armed. The arming is performed by subjecting the actuator 22 to an inwardly directed pressure force. The pressure force will cause the pierceable burst membrane 56 to deform inwardly and to be ruptured by the piercing element 58. The first actuator chamber 50 will not break since it is filled by non-compressible liquid only. The rupture of the burst membrane 56 will cause the CO₂ generating constituent to mix with the non carbonated water to form carbonated water. The above-mentioned gelling agent or alternatively a water soluble coating may be used to slow down the carbonisation process such that the arming of the cooling device 22 is not completed until a few minutes after applying the pressure force onto the actuator 22 in order to avoid a premature activation of the cooling device. The pressure force may be applied in connection with or during the steps of CO₂ flushing of the beverage container, beverage filling of the beverage container, or pasteurization of the beverage container. The pressure force may be applied mechanically, or by the inherent pressure increase associated with the above steps. Alternatively, the burst membrane 56 is replaced by a melting membrane which ruptures at a specific temperature, such as 60 degrees centigrade during pasteurization.

Fig 3C shows the actuator 22 after arming is completed. The CO₂ generating constituent has been reacting with the water forming the carbonated water having a carbonization level corresponding to or slightly lower than the carbonization of the beverage inside the beverage container. The beverage is consequently a carbonate beverage such as beer, soda, cola, tonic or the like. The pressure inside the first actuator chamber 50 should correspond to or be slightly lower than the pressure inside the filled and sealed beverage container (not shown) together with which the cooling device is to be used. The pressure inside the first actuator chamber 50 therefore is about 2-3 bar in room temperature and varies with the temperature, and consequently pressure, of the beverage. The carbonate water should be in pressure equilibrium with the beverage.

Fig. 3D shows the actuator when the outside pressure of the beverage has been removed. The outside pressure may be removed e.g. when the beverage container is being opened. When the outside pressure is removed, i.e. when the cooling device is subjected to the ambient pressure of the atmosphere, the pressure within the carbonate water will cause the wall of the first actuator chamber 50 to rupture at the pre-determined breaking point 54. It is to be realized that the housing of the actuator 22 is stiff or otherwise stiffened to present deformation when relieving the pressure inside the actuator. Optionally, as described above, a burst membrane is used. The rupture of the first actuator chamber 50 will cause the carbonated water to mix with the first reactant 24 and the second reactant 26, which will react and thereby the cooling device is activated. Optionally, the foam generator establishes a large quantity of foam which will increase the reaction speed. In some embodiments the first and second reactants 24,26 will as a reaction product generate water which will contribute to drive the reaction. As a safety feature, the reactants may include a gelling agent such as gelatine, aerosil, polyacrylate which turns the used reactants into a gel after the endothermal reaction is complete. In this way any misuse of the used reactants is prevented and the beverage can may be compacted using a standard can compactor.

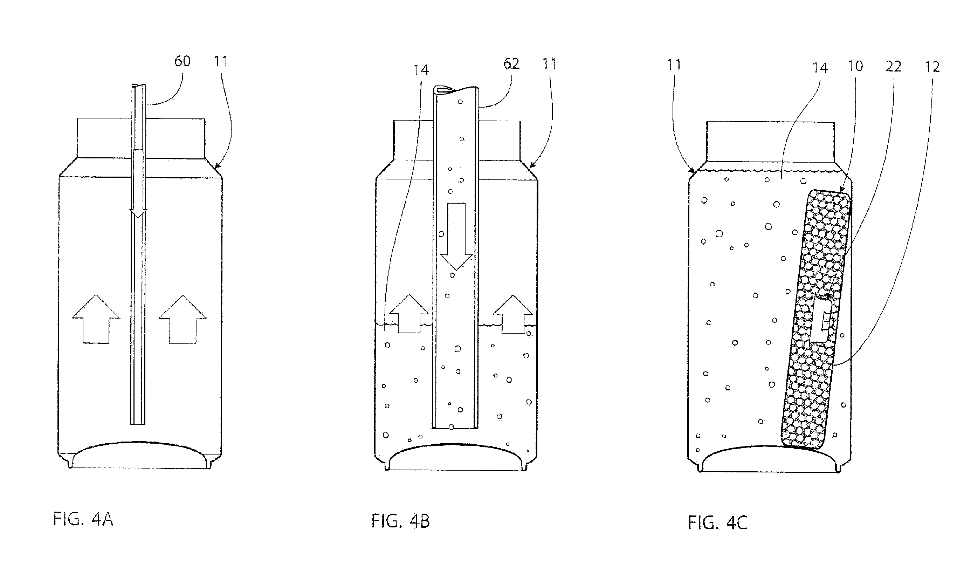

Figs. 4A-F show the series of steps of filling and pressurising a beverage can 11 including a cooling device 10 of the type shown in figure 1. The present embodiment shows the arming of the cooling device during pasteurization, however, arming is also possible in connection with or during the steps of CO₂ flushing of the beverage container or beverage filling of the beverage container, as indicated above, in particular for non-pasteurized beverages.

Fig. 4A shows the process of ventilating or flushing the beverage can 11 by CO₂ prior to filling. The beverage can 11 presently does not include the cooling device, however, in an alternative embodiment the cooling device may be included in the beverage can 11 prior to flushing by CO₂. The beverage can 11 is typically flushed or ventilated three times by inserting a ventilating hose 60 and injecting carbon dioxide (CO₂) with a pressure of about 3 bar into the beverage can 11. The pressure during flushing is sufficient to arm the cooling device, if present. The carbon dioxide will substitute the air inside the beverage can 11. Any amount of residual air inside the beverage can 11 may result in deterioration of the beverage. Subsequent to the ventilation, the beverage can 11 is filled with beverage as shown in Fig. 4B.

Fig. 4B shows the beverage filling process, in which a filling hose 62 is inserted and beverage is injected into the beverage can 11. The beverage is pre-carbonated and having a low temperature of just a few degrees centigrade above the freezing point for accommodating a maximum amount of carbon dioxide dissolved in the beverage.

Fig. 4C shows the filled beverage can 11 when the filling hose has been removed. The beverage is kept in a carbon dioxide atmosphere having a temperature just above the freezing point to be able to be saturated with carbon dioxide without the need of a high-pressurized environment. In the present view, the non-armed, non-activated cooling device 10 has been positioned inside the beverage container.

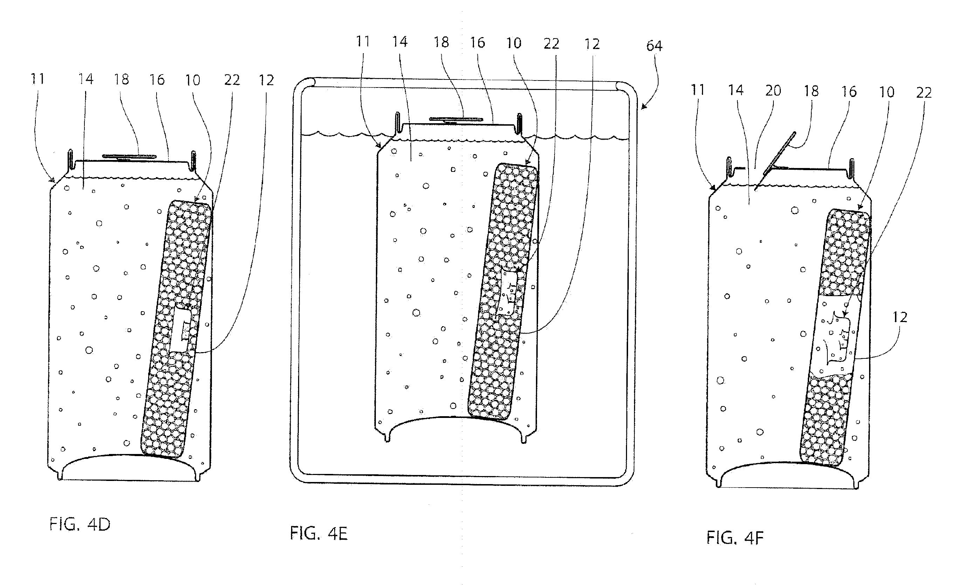

Fig. 4D shows a beverage can 11, where a lid 16 has been sealed on to the container 12. The lid 16 is folded on to the container 11 forming a pressure tight sealing.

Fig. 4E shows the beverage can 11 inside a pasteurisation plant 64. The pasteurisation plant comprises a water bath of about 70 degrees centigrade. The pasteurisation process is well known for retarding any microbiological growth in food products. During pasteurisation, the pressure inside the beverage can 11 will rise to about 6 bar due to the heating of the beverage and the resulting release of carbon dioxide from the beverage. The cooling device should be made sufficiently rigid to be able to withstand such high pressures. In addition, the reactants used inside the cooling device should remain unaffected of the increased temperature and pressure, i.e. they should not combust, react, melt, boil or otherwise change their state making a later initiation of the reaction impossible or ineffective. It should also be noted that for non-pasteurised beverages, such as mineral water, the reactants should still remain unaffected up to a temperature of at least 30 to 35 degrees centigrade, which is a temperature which may be achieved during indoor or outdoor storage. In the present embodiment, the arming of the cooling device takes place during pasteurization, when the pressure inside the beverage container and inside the common reaction chamber causes a pressure force onto the pierceable burst membrane 56 which will be deformed inwardly such that the piercing element 58 pierces the pierceable burst membrane and the CO₂ generating constituents mix with the non carbonated water to generate carbonated water.

Fig. 4F shows the beverage can 11 in room temperature. The pressure inside the beverage can 11 is about 3 to 5 bar, which is sufficient for preventing activation of the cooling device 10. When the beverage can 11 is being opened, the pressure inside the beverage can 11 will escape to the surrounding atmosphere, and the beverage can 11 will assume atmospheric pressure of 1 bar. The pressure of the carbonated water 316 in the actuator 22 will thereby be higher than the surrounding pressure and the wall of the first actuator chamber 50 will burst at the pre-determined breaking point 54 to allow the water to mix with the first and second reactants 24,26 in the housing and allow the coatings to be dissolved. The cooling device 22 is thereby activated.

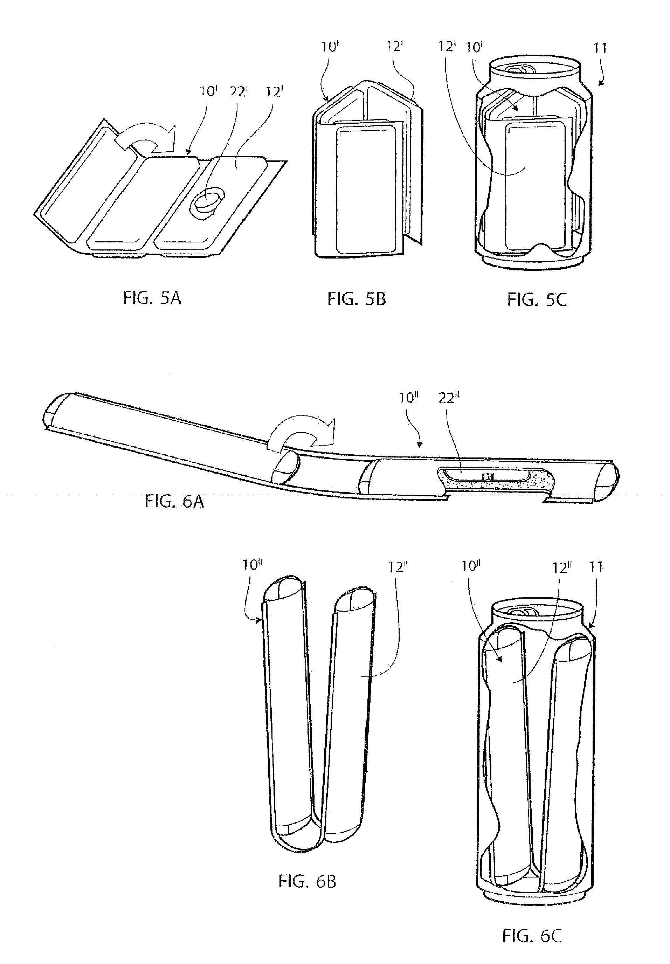

Fig 5A shows an embodiment of a set of cooling devices 10^{I} formed by three cooling devices connected by an outer surface. Each cooling device of the set of cooling devices 10^{I} includes a separate actuator 22^{I}. The set of cooling devices 10^{I} is preferable made as a unitary laminate as described in WO 2011/157735. The cooling devices , constituting elongated flat bodies, are separated by a thin joint located at the long end of two adjacent cooling devices, allowing the cooling devices of set cooling devices 10^{I} to be folded as shown by the arrow.

The inside of the cooling device 10^{I} may correspond to the previous cooling device shown in figures 1, 3 and 4, except that the activation is performed by a mechanical action from the outside, i.e. by pressing a button. The button may be directly coupled to e.g. a rupturable diaphragm or the like separating the two reactants, thus by pressing the button the diaphragm is ruptured allowing the two reactants to contact each other. Alternatively the button may be acting on a pressure space, and the change of pressure causes a flexible diaphragm to move and start the chemical reaction.

Fig 5B shows the set of cooling devices 10^{I} in a folded "triangular" state.

Fig 5C shows the folded set of cooling devices 10^{I} inside a beverage container 11.

Fig 6A-C show an alternative embodiment of a set of cooling devices 10^{II}, similar to the embodiment shown in connection with fig 5, in which the cooling devices are connected by means of a joint located at a short end of each cooling device. The embodiment of fig 6A-C differs from the embodiment of fig 5 in that only two cooling devices are connected in the set of cooling devices 10^{II} by the outer surface ^{I}. The set of cooling devices 10^{II} may be folded as indicated by the arrow to form a folded state fittable inside a beverage can 11.

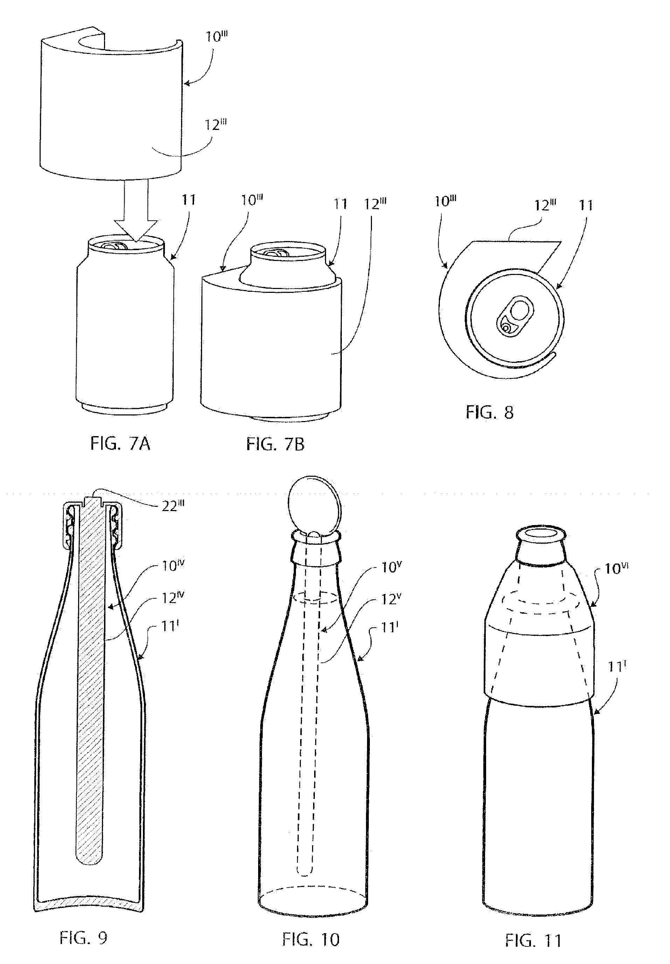

Fig 7A shows a cooling device 10^{III} in the form of a cooling sleeve which may be applied outside a beverage container 11.

Fig 7B shows a side view of a cooling device 10^{III} in the form of a cooling sleeve which has been applied outside a beverage container 11.

Fig 8 shows a top view of a cooling device 10^{III} in the form of a cooling sleeve which has been applied outside a beverage container 11.

Fig 9 shows a beverage bottle 12^{I} having a lid in the form of a cooling device 10^{IV}. The a cooling device 10^{IV} may be activated by pressing the actuator 22^{III}. After a few minutes, the cooling device 10^{IV} cooling device constituting a lid may be removed.

Fig 10 shows a beverage bottle 12^{I} having a cooling device 10^{IV} constituting a drink stick. The cooling device 10^{IV} may be activated and introduced into the beverage bottle 12^{I} after the standard cork has been removed.

Fig 11 shows a beverage bottle 12^{I} having a cooling device 10^{IV} constituting a neck sleeve which is applied outside the neck of the bottle 12^{I}, similar to the embodiment shown in figs 7-8.

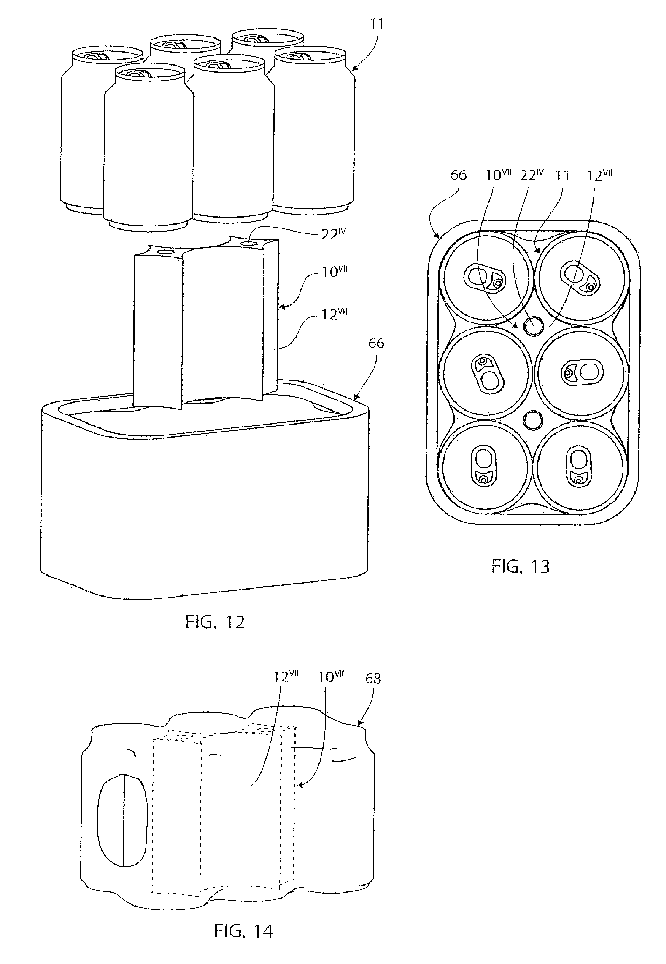

Fig. 12 shows a self-cooling container constituting a cooling box comprising an insulating carrier 66 being made of rigid insulating material, such as Styrofoam, (foamed polystyrene) or the like. The insulating carrier 66 has a cavity defining a space suitable for accommodating six standard beverage cans 12, i.e. typically sized beverage cans having a shape corresponding to the beverage cans described above and designated the reference numeral 12, however exclusive of the cooling device. The inner cavity of the insulating carrier 66 defines a flat bottom surface and an inner continuous sidewall which has bulges for defining a plurality of interconnected arcs corresponding to the outer surface of six beverage cans defining positions for individual placement of the beverage cans 12 when placed in the well known 3x2 "sixpack" configuration so that a stable and secure positioning is achieved. The inner cavity is thus configured for accommodating six beverage cans 12 in two rows with three beverage cans 12 in each row. A spacer is provided for filling up the inner space between the six beverage cans 12"' for added stability. The spacer is constituting a cooling device 10^{VII} having an external shape corresponding to a beverage cans 12. The cooling device 10^{VII} has an actuator 22^{IV}, which is pressed for activating the chemical reaction inside the cooling device 10^{VII}.

Fig. 13 shows a top view of the self-cooling container comprising the insulating carrier 66 accommodating the six beverage cans 11 and the cooling device 10^{VII}. The self-cooling container may be stored in room temperature. When the beverage in the beverage cans is about to be consumed, the activator 22^{IV} on the cooling device 10^{VII} is pressed and the cooling is activated. An optional cover on the insulation carrier 66 may be provided as an additional insulation.

Fig. 14 shows an alternative embodiment of a self-cooling container which is similar to figs 12 and 13, however, the insulating carrier 66 has been replaced by a plastic layer 68 which may be e.g. shrinked onto the beverage cans 12. The thin plastic layer 68 does not offer any insulation, however, the packaging will be cheaper compared to the previous embodiment.

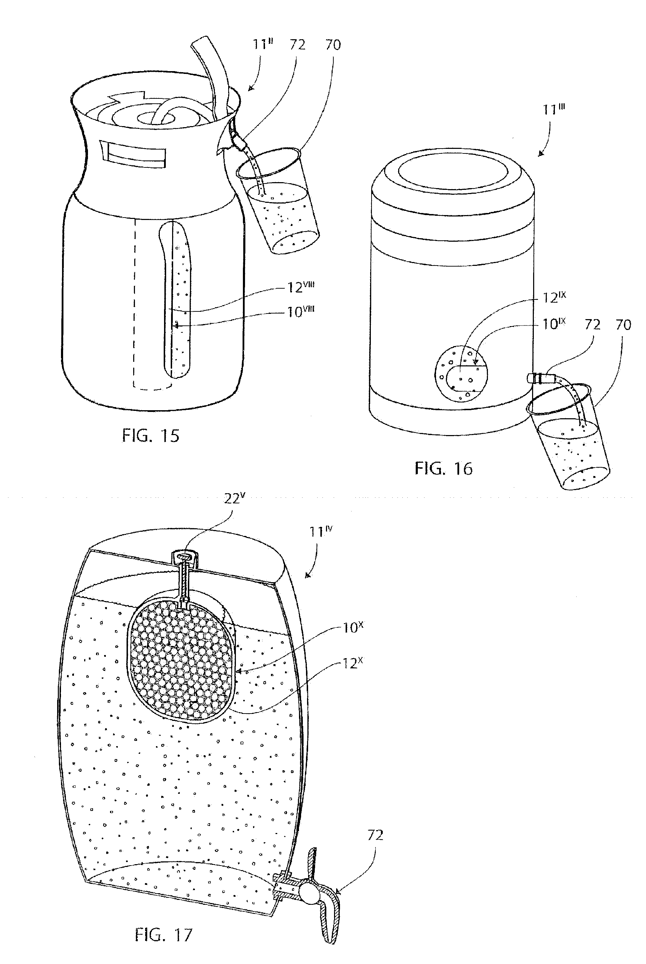

Fig 15 shows a first embodiment of a self cooling partykeg 12^{II}. The partykeg 12^{II} is a large beverage container of about 3-5 liters or 5-10 liters. The present embodiment is preferably made of plastics. The partykeg 12^{II} comprises a tap 72 for allowing the beverage within the partykeg 12^{II} to be dispensed into a beverage glass 70. The partykeg 12^{II} further comprises a cooling device 10^{VII} located within the partykeg 12^{II} in contact with the beverage for cooling the beverage. The cooling device 10^{VIII} may be activated from the outside by pressing a button or the like.

Fig 16 shows a second embodiment of a self cooling partykeg 12^{III} which is essentially identical with the first embodiment presented in connection with fig 14. The present embodiment is preferably made of metal.

Fig 17 shows a third embodiment of a self cooling partykeg 12^{IV} which is essentially identical with the first and second embodiments presented in connection with figs 14 and 15. The partykeg 12^{IV} has a visual actuator 22^{V} operable from the outside.

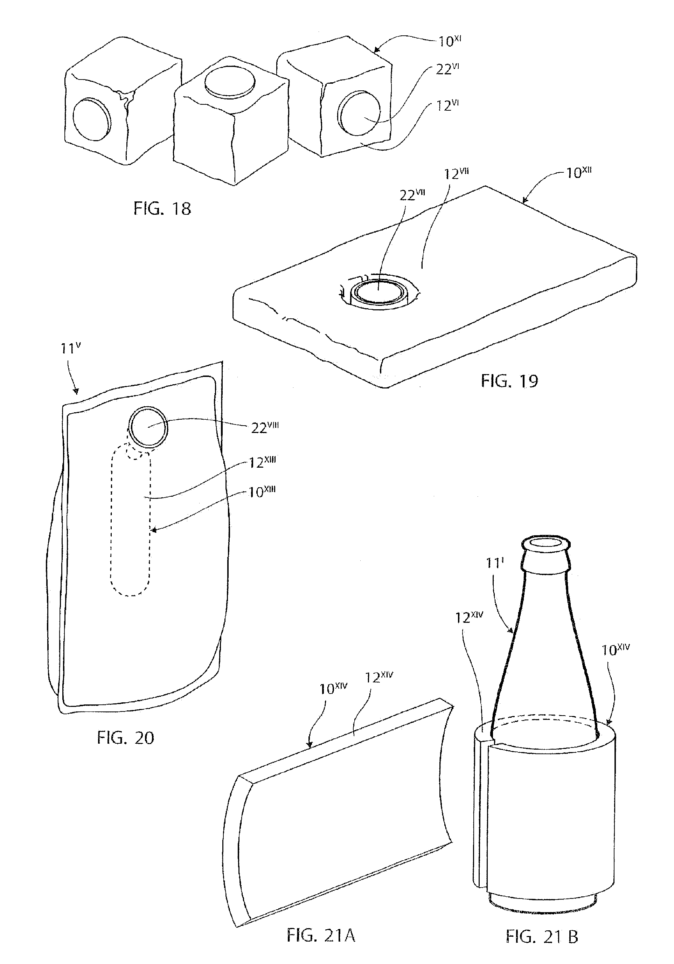

Fig 18 shows a set of cooling devices 10^{XI} resembling ice cubes and intended to be introduced into a glass of soft drinks in order to cool the soft drink. Such cooling devices 10^{XI} may be stored in room temperature and activated by pressing the actuator 22^{VI} at the time when the cooling effect is needed.

Fig 19 shows a cooling devices 10^{XII} resembling a cooling clock which may be used for various purposes ranging from cooling of food products to treating sport injuries. Such cooling devices 10^{XII} may be stored in room temperature and activated by pressing the actuator 22^{VII} at the time when the cooling effect is needed.

Fig 20 shows a beverage bag 12^{V} filled with beverage. The beverage bag 12^{V} has a cooling device 10^{XIII} in contact with the beverage within the beverage bag 12^{V}. An actuator 22^{VIII} is used for initiating the cooling reaction of the cooling device 10^{XIII}

Fig 21A shows a cooling device 10^{XIV} which resembles the cooling block of fig 19.

Fig 21B shows a cooling device 10^{XIV} when wrapped around a beverage bottle 12^{I}.

### List of parts with reference to the figures

10. Cooling device
11. Beverage container
12. Cooling device housing
14. Beverage
16. Lid
18. Tab
20. Opening
22. Actuator
24. First reactant
26. Second reactant
28. Polymeric coating
30. Hydrophobic coating
32. Further hydrophobic coating
34. Fluid bed coating assembly
36. Reaction chamber
38. Inlet
40. Outlet
42. Injector
44. Pump
46. Pipe
48. Grid
50. First chamber
52. Second chamber
54. Predetermined breaking point
56. Pierceable burst membrane
58. Piercing element
60. Ventilating hose
62. Filling hose
64. Pasteurization plant
66. Insulating carrier
68. Plastic layer
70. Beverage glass
72. Tap

## Claims

1. A cooling device comprising a housing, said housing including a first reactant and a second reactant, said first and second reactants being substantially non-toxic and causing when reacting with one another a non-reversible, entropy increasing reaction producing substantially non-toxic products in a stoichiometric number at least a factor 3, preferably at least a factor 4, more preferably at least a factor 5, such as a factor 6, 7 or 8 larger than the stoichiometric number of said reactants, said first reactant initially being separated from said second reactant by a dissolvable or deterioratable polymeric coating and a dissolvable or deterioratable hydrophobic coating, said polymeric coating and said hydrophobic coating each completely encapsulating at least one of said first reactant and said second reactant, said housing further including an actuator for initiating said reaction between said first reactant and said second reactant by at least partially dissolving or deteriorating said polymeric coating and said hydrophobic coating.

2. The cooling device according to claim 1, wherein the thickness of said polymeric coating and/or said hydrophobic coating is between 0.25 and 5 microns, such as 0.5 and 2 microns or about 1 micron.

3. The cooling device according to any of the preceding claims, wherein said first reactants being provided in the form of granulates having a first average diameter, said second reactants being provided in the form of granulates having a second average diameter, said first diameter preferably exceeding said second diameter by at least a factor 2, preferably by a factor 3-5.

4. The cooling device according to claim 3, wherein said first diameter being in the range of 100-5000 microns, preferably 200-2000 microns, more preferably 300-600 microns, and, said second diameter being in the range of 10-300 microns, preferably 50-200 microns, more preferably about 100 microns.

5. The cooling device according to any of the preceding claims, wherein said first reactant constitutes Sr(OH)₂*8H₂O.

6. The cooling device according to any of the preceding claims, wherein said second reactant constitutes NH₄Cl.

7. The cooling device according to claims 5 and 6, wherein the weight ratio between said Sr(OH)₂*8H₂O and said NH₄Cl is between 3.5 and 4.5.

8. The cooling device according to any of the preceding claims, wherein said actuator comprises a mixture of H₂O, surfactant and optionally an alcohol.

9. The cooling device according to any of the preceding claims, wherein said polymeric coating comprises HPMC (Hydroxypropylmethylcelluloses), preferably applied by a fluid bed coating assembly.

10. The cooling device according to any of the preceding claims, wherein said hydrophobic coating comprises a pyrogenic silica, preferably applied as a powder coating.

11. The cooling device according to any of the preceding claims, wherein said housing comprises a flexible bag of polymeric material, preferably a metal coated polymeric material.

12. A beverage container comprising an inner space, said inner space comprising a beverage and a cooling device according to any of the claims 1-9.

13. A multipack comprising a casing, said casing defining an inner space and including one or more beverage containers and one or more cooling devices according to according to any of the claims 1-9.

14. The beverage container or multipack according to any of the claims 12-13, wherein said housing of said cooling device defining a housing volume not exceeding approximately 33% of the specific volume of said beverage and further not exceeding approximately 25% of the inner volume of said inner space, said first and second reactants causing, when reacting with one another, a heat reduction of said beverage of at least 50 Joules/ml beverage, preferably at least 70 Joules/ml beverage, such as 70-85 Joules/ml beverage, preferably approximately 80-85 Joules/ml, within a period of time of no more than 5 min. preferably no more than 3 min., more preferably no more than 2 min.

15. A method of producing a cooling device, said method comprising:
providing a first reactant and a second reactant, said first and second reactants being substantially non-toxic and causing when reacting with one another a non-reversible, entropy increasing reaction producing substantially non-toxic products in a stoichiometric number at least a factor 3, preferably at least a factor 4, more preferably at least a factor 5, such as a factor 6, 7 or 8 larger than the stoichiometric number of said reactants,
providing a dissolvable or deterioratable polymeric coating mixture and a dissolvable or deterioratable hydrophobic coating mixture,
providing a housing, said housing including an actuator for initiating said reaction between said first reactant and said second reactant by at least partially dissolving or deteriorating said polymeric coating and said hydrophobic coating,
coating at least one of said first and second reactants by said polymeric coating mixture, preferably by using a fluid bed coating assembly,
coating at least one of said first and second reactants by mixing at least one of said first and second reactants together with said hydrophobic coating mixture, and,
introducing said first and second reactants into said housing and sealing said housing.
